(19) Europäisches Patentamt
European Patent Office
Office européen des brevets

(11) **EP 4 693 977 A1**

(12) **EUROPEAN PATENT APPLICATION**
published in accordance with Art. 153(4) EPC

(43) Date of publication:
**11.02.2026 Bulletin 2026/07**

(21) Application number: **24785307.0**

(22) Date of filing: **05.04.2024**

(51) International Patent Classification (IPC):
**H04L 1/18** (2023.01)    **H04L 5/00** (2006.01)
**H04W 72/232** (2023.01)

(52) Cooperative Patent Classification (CPC):
**H04L 1/18; H04L 5/00; H04W 72/232**

(86) International application number:
**PCT/KR2024/004503**

(87) International publication number:
**WO 2024/210608 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.04.2023 KR 20230045680**
**12.05.2023 KR 20230062026**

(71) Applicant: **LG Electronics Inc.**
**Yeongdeungpo-gu**
**Seoul 07336 (KR)**

(72) Inventors:
• **LEE, Youngdae**
**Seoul 06772 (KR)**
• **KIM, Seonwook**
**Seoul 06772 (KR)**
• **YANG, Suckchel**
**Seoul 06772 (KR)**
• **MYUNG, Sechang**
**Seoul 06772 (KR)**

(74) Representative: **Jung, Minkyu**
**Wuesthoff & Wuesthoff**
**Patentanwälte und Rechtsanwalt PartG mbB**
**Schweigerstraße 2**
**81541 München (DE)**

(54) **METHOD AND APPARATUS FOR TRANSMITTING AND RECEIVING UPLINK CONTROL INFORMATION IN WIRELESS COMMUNICATION SYSTEM**

(57)     Disclosed are a method and apparatus for transmitting and receiving uplink control information in a wireless communication system. The method performed by a terminal in the wireless communication system, according to an embodiment of the present disclosure, may comprise the steps of: receiving first information about a first period where cell-related DTX is deactivated and a second period where the cell-related DTX is activated; receiving second information for activating transmission of one or more SPS PDSCHs; and transmitting HARQ-ACK information for the one or more SPS PDSCHs on the basis of the first information and the second information. Here, on the basis that a first SPS PDSCH is included in the second period, first HARQ-ACK information about the first SPS PDSCH may be included in the HARQ-ACK information, and on the basis that a second SPS PDSCH overlaps the first period, second HARQ-ACK information about the second SPS PDSCH may be excluded from the HARQ-ACK information.

FIG.7

Receive 1st information related to 1st period in which cell-related DTX is inactive and 2nd period in which cell-related DTX is active — S710

Receive 2nd information activating transmission of one or more SPS PDSCH — S720

Transmit HARQ-ACK information for one or more SPS PDSCH, based on 1st information and 2nd information — S730

**Description**

[Technical Field]

The present disclosure relates to a wireless communication system, and more specifically, to a method and an apparatus for transmitting and receiving uplink control information in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical object of the present disclosure is to provide a method and an apparatus for transmitting and receiving uplink control information in a wireless communication system.

The technical object of the present disclosure is to provide a method and an apparatus for transmitting and receiving HARQ-ACK information for downlink transmission in a wireless communication system to which network energy saving (NES) is applied.

The technical objects to be achieved by the present disclosure are not limited to the above-described technical objects, and other technical objects which are not described herein will be clearly understood by those skilled in the pertinent art from the following description.

[Technical Solution]

A method performed by a user equipment (UE) in a wireless communication system according to an aspect of the present disclosure may comprise: receiving first information related to a first period in which a cell-related Discontinuous Transmission (DTX) is inactive and a second period in which the cell-related DTX is active; receiving second information activating transmission of one or more semi-persistent scheduling (SPS) physical downlink shared channel (PDSCH); and transmitting hybrid automatic repeat request-acknowledgement (HARQ-ACK) information for the one or more SPS PDSCHs based on the first information and the second information. Herein, based on a first SPS PDSCH being included in the second period, first HARQ-ACK information for the first SPS PDSCH may be included in the HARQ-ACK information, and based on a second SPS PDSCH overlapping the first period, second HARQ-ACK information for the second SPS PDSCH may be excluded from the HARQ-ACK information.

A method performed by a base station in a wireless communication system according to an additional aspect of the present disclosure may comprise: transmitting first information related to a first period in which a cell-related Discontinuous Transmission (DTX) is inactive and a second period in which the cell-related DTX is active; transmitting second information activating transmission of one or more semi-persistent scheduling (SPS) physical downlink shared channel (PDSCH); and receiving hybrid automatic repeat request-acknowledgement (HARQ-ACK) information for the one or more SPS PDSCHs based on the first information and the second information. Herein, based on a first SPS PDSCH being included in the second period, first HARQ-ACK information for the first SPS PDSCH may be included in the HARQ-ACK information, and based on a second SPS PDSCH overlapping the first period, second HARQ-ACK information for the second SPS PDSCH may be excluded from the HARQ-ACK information.

[Technical Effects]

According to the present disclosure, a method and an apparatus for transmitting and receiving uplink control information in a wireless communication system may be provided.

According to the present disclosure, a method and an apparatus for transmitting and receiving HARQ-ACK information for downlink transmission in a wireless communication system to which network energy saving (NES) is applied may be provided.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 is a diagram illustrating an example of an operation for transmitting HARQ-ACK information by a terminal according to the present disclosure.

FIG. 8 is a diagram illustrating an example of an operation for supporting transmission of HARQ-ACK information by a terminal by a base station according to the present disclosure.

FIG. 9 illustrates an NES-based SPS PDSCH and related PUCCH transmission and reception procedure according to an embodiment of the present disclosure.

FIG. 10 illustrates an NES-based SPS PDSCH and related HARQ-ACK delay procedure according to an embodiment of the present disclosure.

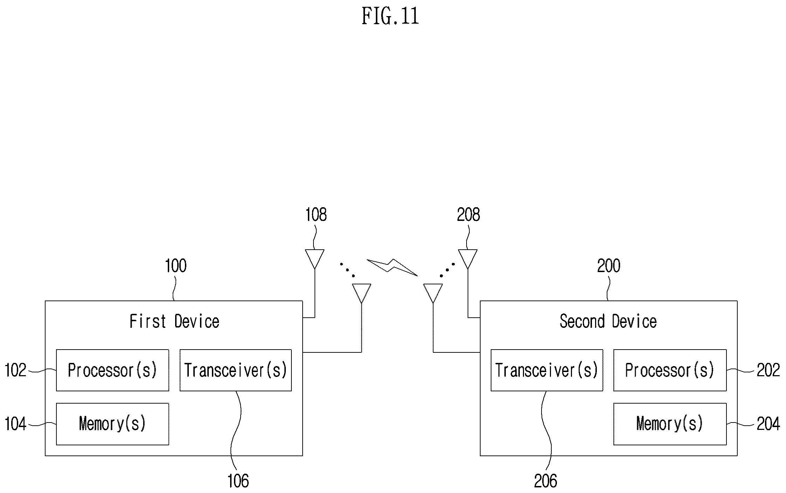

FIG. 11 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.21 1(physical channels and modulation), TS 36.212(multiplexing and channel coding), TS 36.213(physical layer procedures), TS 36.300(overall description), TS 36.33 1(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform

- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

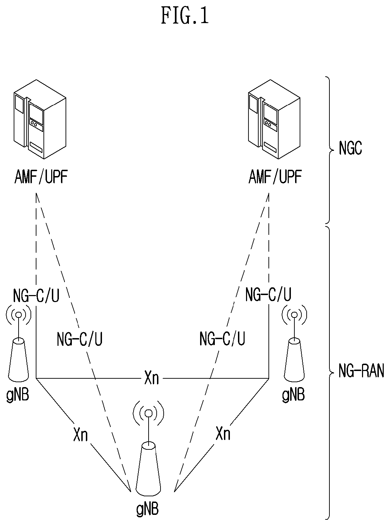

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

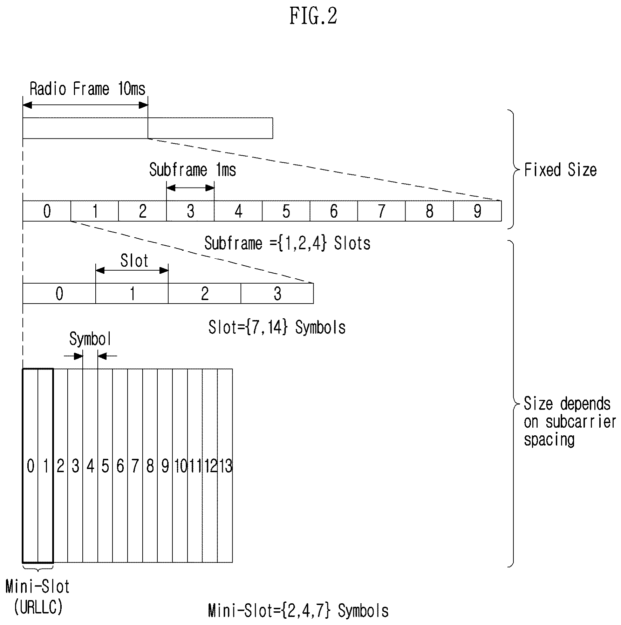

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $Tf = (\Delta f_{max} N_f/100) \cdot T_c = 10$ms. Here, a radio frame is configured with 10 subframes having a duration of $T_{sf}(\Delta f_{max} N_f/1000) \cdot Tc = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^{\mu} \in \{0,..., N_{slot}^{subframe}-1\}$ in a subframe and are numbered in an increasing order of $n_s,f^{\mu} \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu=2$ (SCS is 60kHz), 1 subframe may include 4 slots referring to Table 3. 1 subframe=

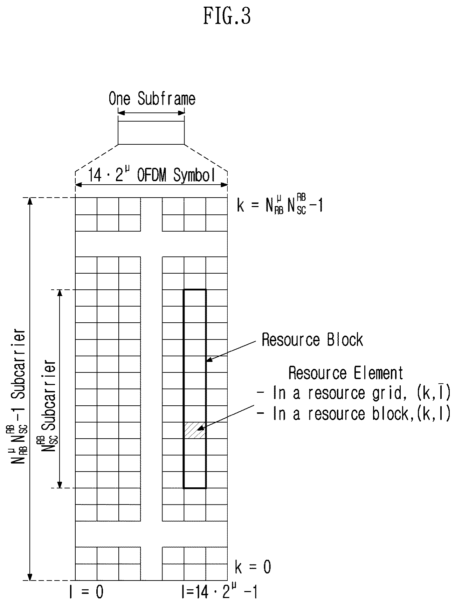

{1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing. FIG. 3 illustrates a resource grid in a wireless communication system to which the present disclosure may be applied. In reference to FIG. 3, it is illustratively described that a resource grid is configured with $N_{RS}^{\mu}N_{sc}RB$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2P N_{symb}^{(P)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l}^{(p,\mu)}$. When there is no risk of confusion or when a specific antenna port or numerology is not specified, indexes p and $\mu$ may be dropped, whereupon a complex value may be $a_{k,l}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

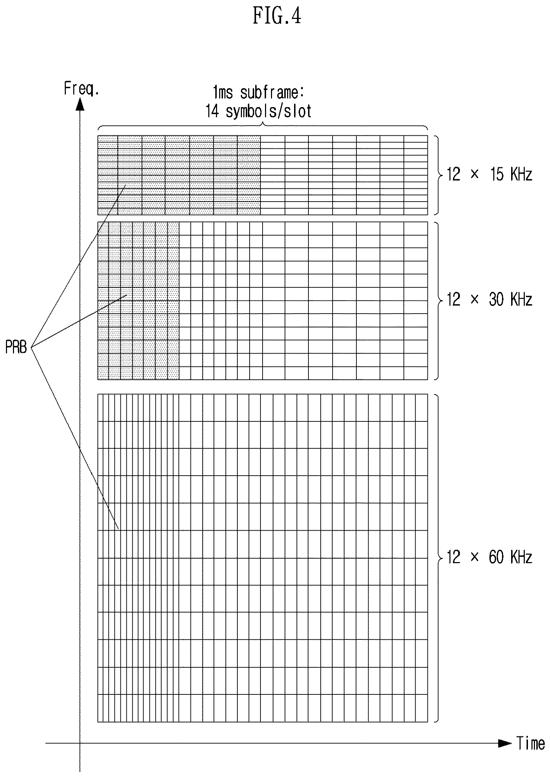

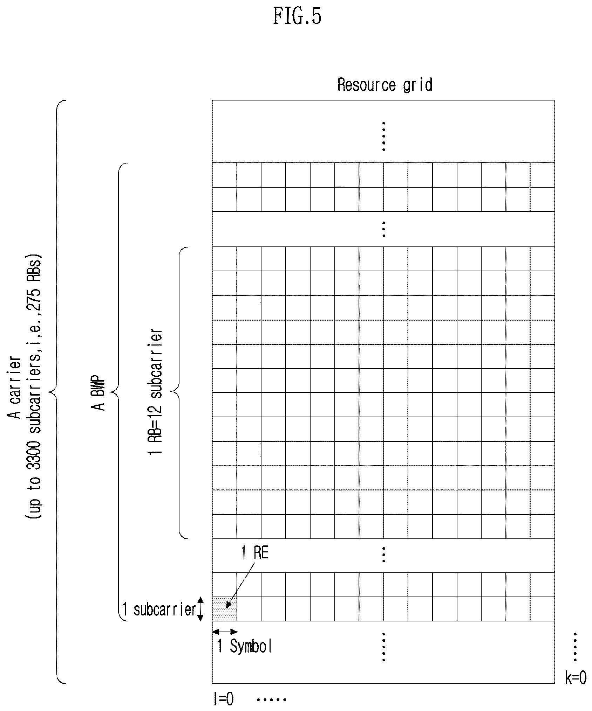

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

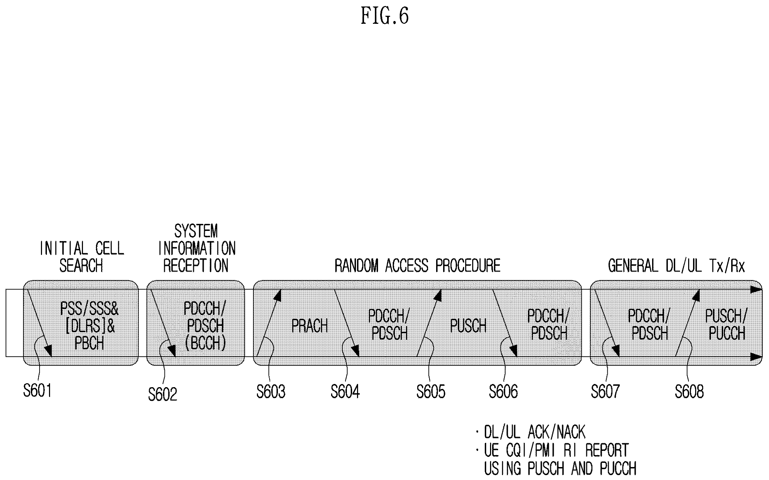

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|:---:|:---:|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted. DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted. DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A quasi co-location type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port(s) is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

Transmission and reception of HARQ-ACK (hybrid automatic repeat request-acknowledgement) information considering network energy saving (NES)

The UE may support reception based on beamforming in downlink reception. That is, the UE may receive a downlink signal by using a specific beam among a plurality of candidate beams. When the UE is in a connected mode, the base station and the UE may maintain an optimal beam for the UE through a beam management (BM) procedure. Accordingly, the base station may transmit a downlink physical channel (e.g., PDCCH, PDSCH, etc.) by using an optimal transmission (TX) beam suitable for the UE, and the UE may receive the downlink physical channel by using an optimal reception (RX) beam.

For improvement of a wireless communication system, a scheme for reducing power consumption of a network node (for example, a base station, a cell, a TRP, a relay, etc.) is being discussed.

In this regard, it is necessary to define a reception operation of a semi-persistent scheduling (SPS)-based downlink data channel (e.g., SPS PDSCH) of a UE and/or a transmission operation of HARQ-ACK information thereof, in consideration of a power saving operation (NES) of the network node.

In the present disclosure, various examples are described in which a UE connected to a base station performing NES operation receives transmission/retransmission for a downlink channel, and configures/defines transmission/reception/deferral operation of HARQ-ACK information therefor according to whether or not the NES operation is performed. Specifically, the present disclosure includes various examples for transmitting/receiving and deferring HARQ-ACK information for an SPS PDSCH (re)transmitted from a network node (for example, a base station) performing an NES operation. In the following examples, description is mainly made assuming transmission/reception operation of an SPS PDSCH and HARQ-ACK information thereof, but the scope of the present disclosure is not limited thereto, and the examples of the present disclosure may also be similarly applied to a downlink channel based on another configuration/scheduling scheme and HARQ-ACK information thereof.

In the present disclosure, that the network node operates in an NES mode may mean performing the following operation. For example, the network node may set a plurality of periods(/sections) (i.e., discontinuous transmission (DTX) periods of the network node) for deactivating/OFF transmission of specific DL signal(s) during a predetermined specific time period in advance. The network node may dynamically indicate one OFF period among the configured plurality of OFF periods to the UE. The UE may know that the DL signal associated with the indicated OFF period will not be transmitted from the network node within the OFF period. Accordingly, power consumption of the network node and the UE may be saved.

In the NES mode, the OFF period may be defined in a time, frequency, and/or spatial domain. For example, the OFF period may be defined in the time domain, and time lengths of the plurality of OFF periods may be identical to each other or may be different from each other. For example, the OFF period may be defined in the frequency domain through a method such as bandwidth part (BWP) switching, dynamic RB adaptation, etc. For example, the OFF period may be defined in the spatial domain by deactivating specific antenna port(s) of the network node semi-statically or dynamically (i.e., the network node does not transmit/receive a wireless signal through the corresponding antenna port(s)).

For application of the operation according to the present disclosure, the network node may activate or deactivate the NES mode. For example, when one base station controls a plurality of cells, whether to activate the NES mode may be independently applied to each cell. In addition, the network node may inform the UE of information on activation or deactivation of NES.

Unless otherwise defined in the present disclosure, configuration for a UE by a base station may include providing the configuration information to the UE through higher layer (e.g., RRC) signaling. Unless otherwise defined in the present disclosure, command/indication of a base station to a UE may include providing the command/indication to the UE through MAC CE and/or DCI. Unless otherwise defined in the present disclosure, predefined information with respect to a base station and a UE may include information that the base station and the UE already possess in advance without separate signaling/command/indication.

In the present disclosure, with respect to an operation of a UE connected to a network node supporting an NES operation, different first period and second period may be configured/determined according to one or a plurality of the following cases.

- Case 1. A first period operating in an NES mode and a second period operating in a non-NES mode
- Case 2. A first period being an inactive time of cell DTX and a second period being an active time of cell DTX (that is, the first period corresponds to a time period in which the network node does not perform transmission (TX) for a specific cell, and the second period corresponds to a time period in which the network node performs transmission (TX) for a specific cell)
- Case 3. A first period being an inactive time of UE DRX and a second period being an active time of UE DRX (that is, the first period corresponds to a time period in which the UE does not perform reception (RX), and the second period corresponds to a time period in which the UE performs reception (RX))
- Case 4. A first period being an inactive time of cell DRX and a second period being an active time of cell DRX (that is, the first period corresponds to a time period in which the network node does not perform reception (RX), and the second period corresponds to a time period in which the network node performs reception (RX))
- Case 5. A first period being an inactive time of UE DTX and a second period being an active time of UE DTX (that is, the first period corresponds to a time period in which the UE does not perform transmission (TX), and the second period corresponds to a time period in which the UE performs transmission (TX))

Based on configuration of the network node, only the second period may be set, or both the first period and the second period may be configured, for each of cell, BWP, frequency, RS for RLF (radio link failure) purpose, AP (antenna port), AP group, and/or antenna element group.

With respect to the aforementioned first period and second period, a time period other than the first period may correspond to the second period, and a time period other than the second period may correspond to the first period. Additionally, the network node may separately configured the first period and the second period for each of the aforementioned cases. In this case, for different cases, a specific time period may correspond to the first period or the second period. In consideration thereof, when a specific time period belongs only to the first period, the UE may perform the operation of the first period in the present disclosure, and when a specific time period belongs only to the second period, the UE may perform the operation of the second period in the present disclosure. Additionally or alternatively, when the first period and the second period overlap, the UE may perform only the operation of the first period in the present disclosure, or may preferentially perform the operation of the first period. Additionally or alternatively, when the first period and the second period overlap, the UE may perform only the operation of the second period in the present disclosure, or may preferentially perform the operation of the second period.

In the present disclosure, based on the first period and the second period related to NES, detailed examples are described with respect to transmission/reception scheme of a downlink channel and uplink feedback information thereof by a network node and a UE.

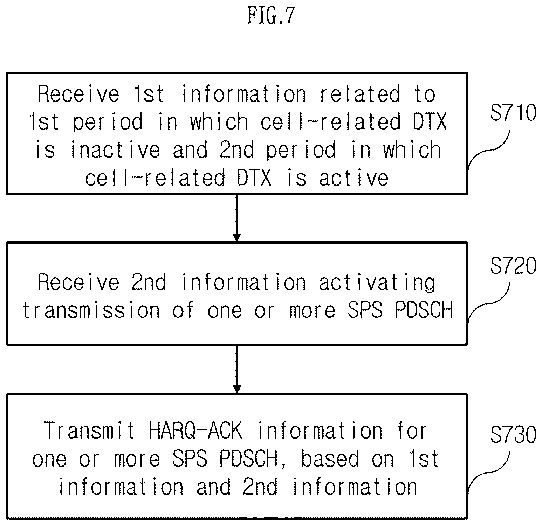

FIG. 7 is a diagram illustrating an example of an operation for transmitting HARQ-ACK information by a terminal according to the present disclosure.

In step S710, the UE may receive first information related to a first period in which cell-related Discontinuous Transmission (DTX) is inactive and a second period in which cell-related DTX is active from the network.

For example, the UE may be configured/indicated, through higher layer signaling and/or dynamic signaling, to receive information on a time period related to operation based on an network energy saving (NES) mode of the network. The UE may determine/define an active period and an inactive period based on the information.

For example, the first information may be received through an RRC message.

In this regard, with respect to the NES operation of the network, a time period other than the first period (i.e., inactive period) may correspond to the second period (i.e., active period), and a time period other than the second period (i.e., active period) may correspond to the first period (i.e., inactive period).

In step S720, the UE may receive second information that activates transmission of one or more SPS PDSCHs from the network.

For example, the UE may receive information on one or more SPS configurations related to SPS PDSCH, and may receive information for activating specific SPS configuration(s). Thereafter, the UE may operate to receive SPS PDSCH(s) corresponding to the activated SPS configuration(s). With respect to reception of the SPS PDSCH(s), the UE may consider the aforementioned first period and second period.

For example, the second information may be received through MAC-CE or DCI.

In step S730, the UE may construct HARQ-ACK information for one or more SPS PDSCHs being transmitted based on the aforementioned first information and second information, and may transmit it to the network.

In this regard, when a first SPS PDSCH is (completely) included in the second period (that is, when the first SPS PDSCH does not overlap with the first period), first HARQ-ACK information for the first SPS PDSCH may be included in the HARQ-ACK information in step S730. On the contrary, when a second SPS PDSCH overlaps with the first period, first HARQ-ACK information for the second SPS PDSCH may be excluded from the HARQ-ACK information in step S730. For example, when the second SPS PDSCH overlaps with the first period, the UE may not need to receive the corresponding second SPS PDSCH and may omit reporting of HARQ-ACK information therefor. Here, that the second SPS PDSCH overlaps with the first period may mean that a part or all of the second SPS PDSCH is included in the first period, and that a part or all of the second SPS PDSCH is not included in the second period.

Additionally or alternatively, the HARQ-ACK information in step S730 may be configured to be transmitted in a specific uplink resource (e.g., PUCCH resource or PUSCH resource, etc.). In this case, whether or not transmission is performed in the specific uplink resource may be determined based on a relationship between the specific uplink resource and at least one of the aforementioned first period or second period. Specifically, when the specific uplink resource is (completely) included in the second period, the HARQ-ACK information may be transmitted in the specific uplink resource. On the contrary, when the specific uplink resource overlaps with the first period (i.e., when a part or all of the specific uplink resource is included in the first period), the HARQ-ACK information may not be transmitted in the specific uplink resource.

Additionally or alternatively, when the specific uplink resource configured for transmitting HARQ-ACK information overlaps with the first period, transmission of the corresponding HARQ-ACK information may be deferred. In this regard, transmission of the deferred HARQ-ACK information may be configured/defined to be transmitted in an uplink resource allocated to a subsequent second period or in an uplink resource allocated nearest to the subsequent second period.

Additionally or alternatively, the second period may be set based on a predefined timer (e.g., on-duration timer, etc.) mapped to an index of an SPS configuration.

Additionally or alternatively, at least one of the aforementioned first period or second period may be set on a cell basis. As described above, at least one of the first period or second period may be associated with an network energy saving (NES) mode of one or more cells of the network node to which the UE is connected.

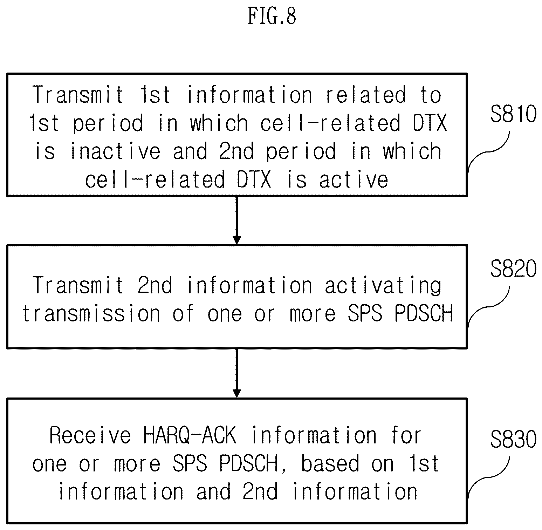

FIG. 8 is a diagram illustrating an example of an operation for supporting transmission of HARQ-ACK information by a terminal by a base station according to the present disclosure.

In step S810, the base station may transmit first information related to a first period in which cell-related Discontinuous Transmission (DTX) is inactive and a second period in which cell-related DTX is active to the UE.

Since detailed features of the first period, the second period, and the first information are the same as those described with reference to FIG. 7, overlapping description is omitted.

In step S820, the base station may transmit second information that activates transmission of one or more SPS PDSCHs to the UE.

Since detailed features of one or more SPS PDSCHs and the second information related to activation thereof are the same as those described with reference to FIG. 7, overlapping description is omitted.

In step S830, the base station may receive HARQ-ACK information configured for one or more SPS PDSCHs being transmitted based on the aforementioned first information and second information from the UE.

In this regard, when a first SPS PDSCH is (completely) included in the second period (i.e., when the first SPS PDSCH does not overlap with the first period), first HARQ-ACK information for the first SPS PDSCH may be included in the HARQ-ACK information in step S730. On the contrary, when a second SPS PDSCH overlaps with the first period, first HARQ-ACK information for the second SPS PDSCH may be excluded from the HARQ-ACK information in step S730.

Since detailed features of HARQ-ACK information configured for one or more SPS PDSCHs and a method of configuring HARQ-ACK information based on a relationship between the first period or the second period and the SPS PDSCH are the same as those described with reference to FIG. 7, overlapping description is omitted.

Hereinafter, various examples of transmission and reception of NES-based SPS PDSCH and HARQ-ACK information therefor according to the present disclosure will be described.

Embodiment 1

This embodiment relates to a method of transmitting and receiving an SPS PDSCH and transmitting and receiving HARQ-ACK information via a PUCCH/PUSCH, based on time periods related to an NES.

When SPS, that is, an SPS PDSCH, is configured and activated for a UE, the UE may be configured to receive only a PDSCH including DL slots/symbols corresponding to the aforementioned second period. Additionally or alternatively, in this case, the UE may be configured to receive only a PDSCH not including DL slots/symbols corresponding to the first period (i.e., a PDSCH not overlapping with the first period). Additionally or alternatively, in this case, the UE may be configured to receive only a PDSCH in which all DL slots/symbols constituting the PDSCH are included in the second period (i.e., a PDSCH completely (fully) included in the second period).

Here, the PDSCH may correspond to an SPS PDSCH periodically allocated or a PDSCH retransmitting a transport block (TB) of the SPS PDSCH.

In this regard, based on signaling by a network node (e.g., RRC message configuration by the base station, MAC CE indication, DCI (activating the corresponding SPS), etc.), the UE may perform the aforementioned operation for all activated SPS configurations, or may perform the aforementioned operation only for a specific SPS configuration (e.g., an SPS configuration mapped to a specific SPS configuration index). Additionally or alternatively, the UE may perform the aforementioned operation only for an initial transmission, or may perform the aforementioned operation also for a PDSCH retransmitting a TB of the SPS PDSCH.

Additionally, for an activation time defining the second period in the present disclosure, a separate timer (e.g., an on-duration timer) may be configured. For example, the UE may start or restart the timer at a start time of the second period or at a first SPS PDSCH occasion of each SPS period. For this purpose, the network node may periodically configure the start time of the second period for the UE, or may designate/allocate it through a specific MAC CE or a DCI-based indication. In this regard, the timer may be mapped only to one or more specific SPS configuration index(es) (e.g., SPS-ConfigIndex(es)), only to one or more specific serving cells or DL BWPs in which SPS is configured, and/or to all SPS configurations. In this case, the UE may define/determine a time period driven by the timer as the aforementioned second period.

In relation to the SPS PDSCH procedure considering the aforementioned NES, a network node may allocate a periodic PUCCH resource for the SPS PDSCH. For example, the network node may allocate a resource of a PUCCH for transmitting and receiving HARQ-ACK information (hereinafter, referred to as an A/N PUCCH for clarity of description) for the SPS PDSCH, per SPS configuration index.

In this case, the UE may transmit the A/N PUCCH only during an activation time of the second period, or may transmit the A/N PUCCH only during a separate UL-specific activation time or PUCCH-specific activation time aligned with the activation time of the second period. As an example, when the UE receives the SPS PDSCH during the activation time of the second period, the separate UL-specific activation time or PUCCH-specific activation time may be configured before/after the activation time of the second period by a predetermined offset.

In this regard, when a UL-specific activation time or PUCCH-specific activation time is configured, the UE may define a time period for the UL-specific activation time or the PUCCH-specific activation time, and when the UL-specific activation time or the PUCCH-specific activation time is not configured, the UE may define a time period for the activation time of the second period. The UE may transmit a HARQ-ACK for the SPS PDSCH received in the defined time period via the PUCCH or PUSCH. In this case, the UE may transmit the PUCCH or PUSCH only when UL slot(s) or UL symbol(s) of the PUCCH or PUSCH are all included in the defined time period. That is, the UE may be configured/defined to transmit HARQ-ACK information for the SPS PDSCH only when the UL slot(s) or UL symbol(s) of the PUCCH or PUSCH are all included in the defined time period. Alternatively, the UE may be configured/defined to transmit the PUCCH or PUSCH even when only a part of the UL slot(s) or UL symbol(s) of the PUCCH or PUSCH are included in the defined time period.

In relation to the aforementioned operation, when the resource of the PUCCH/PUSCH for transmitting and receiving HARQ-ACK information for the SPS PDSCH is not included in the aforementioned defined time period (e.g., the time period determined/defined such that the operation of the network node/UE is activated), or is only partially included, the UE may operate based on one or more of the following schemes according to the configuration of the network node.

(Method 1-1)

The UE may operate to transmit the corresponding PUCCH or PUSCH.

For example, when the UE receives an SPS PDSCH transmitted being wholly or partially included in the activation time of the second period, even when the PUCCH/PUSCH for transmitting HARQ-ACK information therefor is not included in or is only partially included in the defined time period, the UE may transmit the corresponding PUCCH/-PUSCH.

However, when transmission of an SPS PDSCH not wholly or partially included in the activation time of the second period occurs (i.e., when transmission of an SPS PDSCH overlapping with an inactive time of the first period occurs), the UE may not transmit the PUCCH/PUSCH for transmitting HARQ-ACK information therefor regardless of whether the UE receives the SPS PDSCH.

In another example, when the UE receives an SPS PDSCH transmitted being wholly or partially included in the activation time of the second period, even when the PUCCH/PUSCH for transmitting HARQ-ACK information therefor is not included in or is only partially included in the defined time period, the UE may not transmit the corresponding PUCCH/PUSCH. Thereafter, when some or all of subsequent PUCCH resources according to the SPS PUCCH configuration are included in the defined time period, the UE may defer transmission of HARQ-ACK information for the SPS PDSCH based on a HARQ-ACK codebook retransmission scheme.

Specifically, when transmission of HARQ-ACK information is deferred, the deferred HARQ-ACK information may be transmitted through an SPS PUCCH resource allocated to the nearest new defined time period after the determination of the deferment. Alternatively, in this case, the deferred HARQ-ACK information may be transmitted through the SPS PUCCH resource most closely allocated among the defined time periods starting after the determination of the deferment. Alternatively, the UE may transmit the deferred HARQ-ACK information at a timing indicated by a DCI by the network node (e.g., an SPS PUCCH resource timing and/or a defined time period timing). In this case, the UE may construct a HARQ-ACK codebook by concatenating the deferred HARQ-ACK information with new HARQ-ACK information to be transmitted through a newly determined SPS PUCCH resource, and may transmit the HARQ-ACK codebook through the determined SPS PUCCH resource. If the determined SPS PUCCH resource overlaps with a PUSCH transmission, the UE may transmit the HARQ-ACK codebook through a UCI payload of the PUSCH.

In relation to the aforementioned scheme, according to a configuration (e.g., RRC configuration) or indication (e.g., MAC CE, DCI, etc.) of the network node, even when the corresponding PUCCH/PUSCH exists within the defined time period, the UE may exceptionally be configured/defined to transmit the corresponding PUCCH/PUSCH.

(Method 1-2)

The UE may operate to skip the corresponding PUCCH or PUSCH, or may operate not to transmit the corresponding HARQ-ACK information by regarding the HARQ-ACK information as disabled.

(Method 1-3)

The UE may operate to defer the corresponding PUCCH or PUSCH to after the activation time. In this case, the activation time may be the aforementioned defined time, that is, the activation time of the second period and/or a UL/PUCCH-specific activation time.

In this case, the UE may defer transmission of HARQ-ACK information for the corresponding SPS PDSCH according to a HARQ-ACK codebook retransmission scheme.

Specifically, when transmission of HARQ-ACK information is deferred, the deferred HARQ-ACK information may be transmitted through an SPS PUCCH resource allocated to the nearest new defined time period after the determination of the deferment. Alternatively, in this case, the deferred HARQ-ACK information may be transmitted through the SPS PUCCH resource most closely allocated among the defined time periods starting after the determination of the deferment. Alternatively, the UE may transmit the deferred HARQ-ACK information at a timing indicated by a DCI by the network node (e.g., an SPS PUCCH resource timing and/or a defined time period timing). In this case, the UE may construct a HARQ-ACK codebook by concatenating the deferred HARQ-ACK information with new HARQ-ACK information to be transmitted through a newly determined SPS PUCCH resource, and may transmit the HARQ-ACK codebook through the determined SPS PUCCH resource. If the determined SPS PUCCH resource overlaps with a PUSCH transmission, the UE may transmit the HARQ-ACK codebook through a UCI payload of the PUSCH.

(Method 1-4)

Since the corresponding PUCCH/PUSCH may not be transmitted, the UE may operate to invalidate or skip the corresponding SPS PDSCH.

That is, the UE may not transmit HARQ-ACK information for the corresponding SPS PDSCH through the aforementioned PUCCH/PUSCH in the defined time period. Therefore, even when the corresponding SPS PDSCH is included in the second period, the UE may not receive the SPS PDSCH, may invalidate a received TB, or may invalidate the corresponding SPS PDSCH resource.

Additionally, together with an operation based on one or more of the aforementioned methods, the UE may perform the following exceptional operations.

For example, with respect to transmission of an SPS PDSCH not wholly or partially included in the activation time of the second period, a case in which transmission of PUCCH/PUSCH for HARQ-ACK information for the activated SPS PDSCH is wholly or partially included in the defined time period may be considered. In this case, the UE may operate to receive the corresponding SPS PDSCH and transmit HARQ-ACK information therefor through the corresponding PUCCH/PUSCH. Alternatively, the UE may operate not to receive the SPS PDSCH and not to transmit HARQ-ACK information therefor. Alternatively, the UE may operate not to transmit HARQ-ACK information therefor regardless of whether the SPS PDSCH is received. Alternatively, the UE may operate to transmit NACK information through the corresponding PUCCH/PUSCH regardless of whether the SPS PDSCH is received.

In another example, even when transmission of PUCCH/PUSCH for HARQ-ACK information for the activated SPS PDSCH is wholly or partially included in the defined time period, a case in which transmission of an SPS PDSCH not wholly or partially included in the activation time of the second period occurs may be considered. In this case, the UE may operate to receive the corresponding SPS PDSCH and not to transmit HARQ-ACK information therefor through the corresponding PUCCH/PUSCH. Alternatively, the UE may operate to transmit NACK information through the corresponding PUCCH/PUSCH. Alternatively, the UE may operate not to receive the SPS PDSCH and not to transmit the corresponding PUCCH/PUSCH.

In the embodiments of the present disclosure described above, the SPS PDSCH may be replaced with a PDSCH for retransmitting a TB of the SPS PDSCH. In this case, HARQ-ACK information for the corresponding PDSCH, that is, the retransmission PDSCH, may be transmitted through a PUCCH resource indicated by a DCI scheduling the retransmission PDSCH. In this regard, the UE may not transmit, may transmit, or may defer transmission of the corresponding HARQ-ACK information according to the operation in the embodiments of the present disclosure.

In this regard, a scheme of not transmitting HARQ-ACK information in the present disclosure may be based on a scheme of not generating HARQ-ACK for a TB received in the MAC layer. Alternatively, the scheme of not transmitting HARQ-ACK information in the present disclosure may be based on a scheme of not transmitting HARQ-ACK information in the PHY layer even when HARQ-ACK information is generated in the MAC layer. Alternatively, the scheme of not transmitting HARQ-ACK information in the present disclosure may be based on a scheme of invalidating the corresponding HARQ-ACK information or a PUCCH or PUSCH (or UCI of a PUSCH) transmitting the corresponding HARQ-ACK information in the PHY layer even when HARQ-ACK is generated in the MAC layer.

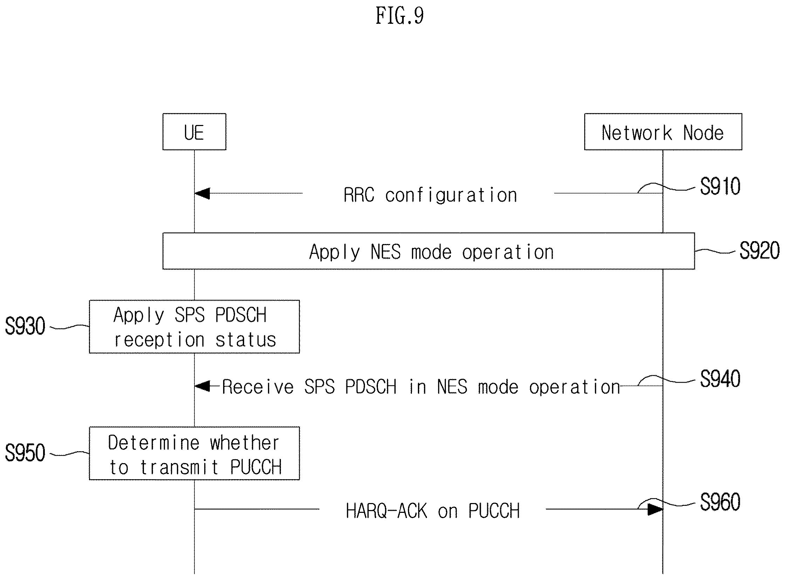

FIG. 9 illustrates an NES-based SPS PDSCH and related PUCCH transmission and reception procedure according to an embodiment of the present disclosure.

Referring to FIG. 9, the network node may transmit to the UE, via an RRC message, configuration related to the NES mode, configuration related to the SPS PDSCH, and the like (S910).

Based on the corresponding configurations and/or predefined information, an operation based on the NES mode at the network node and the UE may be applied (S920). For example, a time period in which the operation of the network node/UE is deactivated (e.g., the aforementioned first period) and a time period in which the operation of the network node/UE is activated (e.g., the aforementioned second period) may be applied.

The UE may, in consideration of the NES mode-based operation, determine whether to receive the SPS PDSCH activated by the network node (S930), and may operate to receive the SPS PDSCH transmitted by the network node based on the operations described in the foregoing embodiments (S940).

Additionally, the UE may, in consideration of the NES mode-based operation, determine whether to transmit the PUCCH (or PUSCH) for transmission of HARQ-ACK information for the corresponding SPS PDSCH (S950). If it is determined to transmit the PUCCH (or PUSCH), the UE may transmit HARQ-ACK information for the SPS PDSCH to the network node via the corresponding PUCCH (or PUSCH) (S960).

In relation to the procedure described in FIG. 9, specific method(s) described/proposed according to embodiments of the present disclosure may be applied.

Embodiment 2

This embodiment relates to a detailed method of deferring transmission of HARQ-ACK information, in connection with the transmission/reception of the SPS PDSCH described above and the transmission/reception of HARQ-ACK information therefor.

For example, when deferring the HARQ-ACK transmission based on Method 1-3 described in Embodiment 1, the UE may determine/identify an inactive period or an active period of cell DTX/DRX semi-statically or dynamically, according to an RRC message-based semi-static configuration or a DCI-based dynamic indication by the network node. That is, the UE may determine the aforementioned defined time period according to the semi-static configuration of the RRC message or the dynamic indication of the DCI. Additionally, the UE may determine, according to the indication of the network node, for each SPS configuration, the maximum deferral length (e.g., sps-HARQ-Deferral) of HARQ-ACK information transmission.

The UE may receive the SPS PDSCH and, according to the PUCCH configuration for SPS usage, determine transmission of HARQ-ACK information for the SPS PDSCH. If the transmission of the HARQ-ACK information overlaps with a DL slot, or, as described above, if the resource for transmission of the HARQ-ACK information is not included in or only partially included in the aforementioned defined time period (e.g., when the resource belongs/overlaps to the first period), the UE may determine to defer the transmission of the HARQ-ACK information. In this case, the UE may determine to transmit the deferred HARQ-ACK information in the next HARQ-ACK transmission resource (e.g., the earliest PUCCH slot) belonging to the defined time period (i.e., the activation time of the second period, the UL/PUCCH-specific active time). At this time, if the next HARQ-ACK transmission resource exists within the maximum deferral length (i.e., the sps-HARQ-Deferral length), the UE may transmit UCI including the deferred HARQ-ACK information. In contrast, if the next HARQ-ACK transmission resource exceeds the maximum deferral length (i.e., the sps-HARQ-Deferral length), the UE may drop the transmission of the deferred HARQ-ACK information.

In relation to the foregoing operation, the UE may operate to determine the maximum deferral length (i.e., the sps-HARQ-Deferral length), or to determine whether to transmit the deferred HARQ-ACK information, based on one or more of the following methods.

(Method 2-1)

When the timing at which the maximum deferral length (i.e., the sps-HARQ-Deferral length) is reached is not included in or only partially included in the aforementioned defined time period (for example, when the timing is included in the first period or in the deactivation period of cell DTX/DRX), the UE may drop the transmission of HARQ-ACK information for the corresponding SPS PDSCH.

(Method 2-2)

Outside the aforementioned defined time period (e.g., in the first period or in the inactive period of cell DTX/DRX), the UE may operate to not perform counting for the maximum deferral length (i.e., the sps-HARQ-Deferral length), but to hold. Thereafter, when the corresponding defined time period (e.g., the second period or the active period of cell DTX/DRX) starts, the UE may resume counting for the maximum deferral length (i.e., the sps-HARQ-Deferral length). At this time, the counting may be resumed starting from the held length value.

(Method 2-3)

Outside the aforementioned defined time period (e.g., in the first period or in the inactive period of cell DTX/DRX), the UE may operate to not perform counting for the maximum deferral length (i.e., the sps-HARQ-Deferral length). Thereafter, when the corresponding defined time period (e.g., the second period or the active period of cell DTX/DRX) starts, the UE may restart counting for the maximum deferral length (i.e., the sps-HARQ-Deferral length) from 0 (or from a specific initial value).

(Method 2-4)

Outside the aforementioned defined time period (e.g., in the first period or in the inactive period of cell DTX/DRX), the UE may operate to not perform counting for the maximum deferral length (i.e., the sps-HARQ-Deferral length). Thereafter, when the corresponding defined time period (e.g., the second period or the active period of cell DTX/DRX) starts, the UE may apply a separately configured maximum deferral length (i.e., the sps-HARQ-Deferral length) for NES use, and may restart counting for the maximum deferral length (i.e., the sps-HARQ-Deferral length) from 0 (or from a specific initial value).

(Method 2-5)

The network node may configure separately a first maximum deferral length (i.e., the first sps-HARQ-Deferral length) for the first period (or the inactive period of cell DTX/DRX) and a second maximum deferral length (i.e., the second sps-HARQ-Deferral length) for the second period (or the active period of cell DTX/DRX).

The UE having received the corresponding configuration may operate to perform counting for the maximum deferral length according to the first maximum deferral length (i.e., the first sps-HARQ-Deferral length) outside the aforementioned defined time period (e.g., in the first period or in the inactive period of cell DTX/DRX). At this time, at the start timing of the first period or the inactive period of cell DTX/DRX, or immediately after the last timing of the second period or the active period of cell DTX/DRX, counting for the maximum deferral length (i.e., the sps-HARQ-Deferral length) may be initialized (or may not be initialized, and counting may be continued from the previous value).

Thereafter, when the aforementioned defined time period (e.g., the second period or the active period of cell DTX/DRX) starts, the UE may operate to perform counting for the maximum deferral length according to the second maximum deferral length (i.e., the second sps-HARQ-Deferral length). At this time, at the start timing of the second period or the activation period of cell DTX/DRX, or immediately after the last timing of the first period or the deactivation period of cell DTX/DRX, counting for the maximum deferral length (i.e., the sps-HARQ-Deferral length) may be initialized (or may not be initialized, and counting may be continued from the previous value).

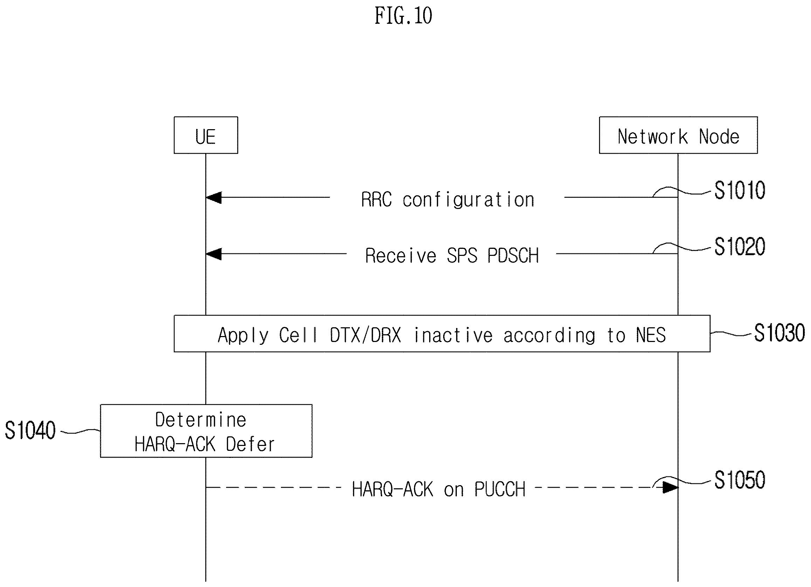

FIG. 10 illustrates an NES-based SPS PDSCH and related HARQ-ACK delay procedure according to an embodiment of the present disclosure.

Referring to FIG. 10, the network node may transmit configurations related to an NES mode, configurations related to an SPS PDSCH, and the like to the UE through an RRC message (S1010).

The UE may receive the SPS PDSCH from the network node based on the corresponding configurations and/or predefined information and the like (S1020).

Additionally, based on the corresponding configurations and/or predefined information and the like, NES mode-based deactivation operations (e.g., deactivation operation of cell DTX/DRX) in the network node and the UE may be applied (S1030). Based on the deactivation operation, the UE may determine whether to defer transmission of HARQ-ACK information for the received SPS PDSCH (S 1040).

When it is determined to defer transmission of the HARQ-ACK information, the UE may perform transmission of the deferred HARQ-ACK information on a PUCCH (or PUSCH) resource determined/configured/indicated based on configurations/rules and the like (S1050). Alternatively, the UE may drop transmission of the HARQ-ACK information.

Regarding the deferral of HARQ-ACK information transmission described in FIG. 10, specific method(s) described/proposed through embodiments of the present disclosure may be applied.

Embodiment 3

This embodiment relates to a method for configuring and transmitting/receiving a HARQ-ACK codebook for an SPS PDSCH based on a time period related to NES.

That is, in this embodiment, with respect to the embodiments described above in the present disclosure, a method for constructing and transmitting/receiving a HARQ-ACK codebook for an SPS PDSCH is explained through specific examples.

For example, based on the embodiment(s) of the present disclosure, when one or more SPS configurations are set and activated, a UE that has received SPS PDSCH(s) for the activated SPS configuration(s) through one or more cells may transmit HARQ-ACK information for the SPS PDSCH(s) via PUCCH resource(s) based on the configuration. As an example, the corresponding PUCCH resource(s) may be determined according to an SPS-PUCCH-AN-List configuration or an n1PUCCH-AN configuration set for the UE.

In this regard, the UE may operate to configure the HARQ-ACK codebook or to determine whether to transmit the corresponding PUCCH (or UCI) based on one or more of the following methods.

(Method 3-1-1)

For a specific SPS configuration of a specific cell, HARQ-ACK bit(s) for a specific SPS PDSCH slot that is fully or partially within the first period (i.e., overlapping with the first period) may not be included in the HARQ-ACK codebook. Accordingly, the UE may construct the HARQ-ACK codebook for SPS to include HARQ-ACK bit(s) in the following examples, excluding the corresponding HARQ-ACK bit(s).

For example, for all other cells except the specific cell, the HARQ-ACK codebook may be configured to include HARQ-ACK bit(s) for SPS PDSCH slot(s) of all activated SPS configuration(s). Additionally, for the specific cell, HARQ-ACK bit(s) for SPS slot(s) of all activated SPS configurations except the specific SPS configuration may be included in the HARQ-ACK codebook. Furthermore, for the specific SPS configuration of the specific cell, the HARQ-ACK codebook may be constructed to include only HARQ-ACK bit(s) for SPS PDSCH slot(s) excluding specific SPS PDSCH slot(s) that are fully or partially within the first period.

The UE may transmit the HARQ-ACK codebook constructed as described above via PUCCH or PUSCH. In this case, if there are no HARQ-ACK bit(s) as in the above examples (i.e., HARQ-ACK bit(s) to be included in the HARQ-ACK codebook), the UE may not report HARQ-ACK information for the SPS.

(Method 3-1-2)

For a specific SPS configuration of a specific cell, HARQ-ACK bit(s) for a specific SPS PDSCH slot that is fully or partially within the first period (i.e., overlapping with the first period) may be indicated as NACK. That is, the corresponding HARQ-ACK bit(s) may be included in the HARQ-ACK codebook as NACK information.

(Method 3-1-3)

For a specific SPS configuration of a specific cell, if all SPS PDSCH slots are fully or partially within the first period (i.e., all SPS PDSCH slots overlap with the first period), the corresponding HARQ-ACK bit(s) may not be included in the HARQ-ACK codebook. Accordingly, the UE may construct the HARQ-ACK codebook for SPS to include HARQ-ACK bit(s) in the following examples, excluding the corresponding HARQ-ACK bit(s).

For example, for all other cells except the specific cell, the HARQ-ACK codebook may be constructed to include HARQ-ACK bit(s) for SPS PDSCH slot(s) of all activated SPS configuration(s). Additionally, for the specific cell, HARQ-ACK bit(s) for SPS slot(s) of all activated SPS configurations except the specific SPS configuration may be included in the HARQ-ACK codebook.

The UE may transmit the HARQ-ACK codebook constructed as described above via PUCCH or PUSCH. In this case, if there are no HARQ-ACK bit(s) as in the above examples (i.e., HARQ-ACK bit(s) to be included in the HARQ-ACK codebook), the UE may not report HARQ-ACK information for the SPS.

(Method 3-1-4)

For a specific SPS configuration of a specific cell, if all SPS PDSCH slots are fully or partially within the first period (i.e., all SPS PDSCH slots overlap with the first period), the corresponding HARQ-ACK bit(s) may not be included in the HARQ-ACK codebook. Accordingly, the UE may construct the HARQ-ACK codebook for SPS to include HARQ-ACK bit(s) in the following examples, excluding the corresponding HARQ-ACK bit(s).

For example, for all other cells except the specific cell, the HARQ-ACK codebook may be constructed to include HARQ-ACK bit(s) for SPS PDSCH slot(s) of all activated SPS configuration(s).

The UE may transmit the HARQ-ACK codebook constructed as described above via PUCCH or PUSCH. In this case, if there are no HARQ-ACK bit(s) as in the above examples (i.e., HARQ-ACK bit(s) to be included in the HARQ-ACK codebook), the UE may not report HARQ-ACK information for the SPS.

(Method 3-1-5)

For a specific SPS configuration of a specific cell, if all SPS PDSCH slots are fully or partially within the first period (i.e., overlapping with the first period), the corresponding HARQ-ACK bit(s) may be indicated as NACK. That is, the corresponding HARQ-ACK bit(s) may be included in the HARQ-ACK codebook as NACK information.

(Method 3-1-6)

For all SPS configurations of a specific cell, if all SPS PDSCH slots are fully or partially within the first period (i.e., overlapping with the first period), the corresponding HARQ-ACK bit(s) may be indicated as NACK. That is, the corresponding HARQ-ACK bit(s) may be included in the HARQ-ACK codebook as NACK information.

Additionally, in relation to the operations described above in the present disclosure, for activated SPS configuration(s), a UE that has received SPS PDSCH through a single serving cell may operate to configure the HARQ-ACK codebook or determine whether to transmit the corresponding PUCCH (or UCI) based on one or more of the following methods.

(Method 3-2-1)

For all SPS configurations of the serving cell, if all SPS PDSCH slots are fully or partially within the first period (i.e., overlapping with the first period), the corresponding HARQ-ACK bit(s) may not be included in the HARQ-ACK codebook. Accordingly, the UE may construct the HARQ-ACK codebook to include HARQ-ACK bit(s) for the remaining PDCCH/PDSCH transmissions (e.g., SPS activation/release) excluding HARQ-ACK information for SPS PDSCH.

(Method 3-2-2)

For all SPS configurations of the serving cell, if all SPS PDSCH slots are fully or partially within the first period (i.e., overlapping with the first period), the corresponding HARQ-ACK bit(s) may be indicated as NACK. That is, the corresponding HARQ-ACK bit(s) may be included in the HARQ-ACK codebook as NACK information.

(Method 3-2-3)

For all SPS configurations of the serving cell, if all SPS PDSCH slots are fully or partially within the first period (i.e., overlapping with the first period), the UE may not transmit the corresponding PUCCH (or PUSCH).

Additionally, in relation to the operations described above in the present disclosure, for activated SPS configuration(s), a UE that has received SPS PDSCH through multiple serving cells configured via carrier aggregation (CA) may operate to construct the HARQ-ACK codebook or determine whether to transmit the corresponding PUCCH (or UCI) based on one or more of the following methods.

(Method 3-3-1)

For all SPS configurations of all serving cells, if all SPS PDSCH slots are fully or partially within the first period (i.e., overlapping with the first period), the corresponding HARQ-ACK bit(s) may not be included in the HARQ-ACK codebook. Accordingly, the UE may construct the HARQ-ACK codebook to include HARQ-ACK bit(s) for the remaining PDCCH/PDSCH transmissions (e.g., SPS activation/release) excluding HARQ-ACK information for SPS PDSCH.

(Method 3-3-2)

For all SPS configurations of all serving cells, if all SPS PDSCH slots are fully or partially within the first period (i.e., overlapping with the first period), the corresponding HARQ-ACK bit(s) may be indicated as NACK. That is, the corresponding HARQ-ACK bit(s) may be included in the HARQ-ACK codebook as NACK information.

(Method 3-3-3)

For all SPS configurations of all serving cells, if all SPS PDSCH slots are fully or partially within the first period (i.e., overlapping with the first period), the UE may not transmit the corresponding PUCCH (or PUSCH).

(Method 3-3-4)

If a specific serving cell is within the first period, HARQ-ACK bit(s) for SPS configuration(s) in that cell may not be included in the HARQ-ACK codebook. Accordingly, for the remaining serving cell(s) excluding the specific cell, HARQ-ACK bit(s) for SPS PDSCH slots of all activated SPS configurations may be included in the HARQ-ACK codebook.

(Method 3-3-5)

If a specific serving cell is within the first period, HARQ-ACK bit(s) for SPS configuration(s) in that cell may be indicated as NACK. That is, the corresponding HARQ-ACK bit(s) may be included in the HARQ-ACK codebook as NACK information.

(Method 3-3-6)

If SPS transmission for a specific SPS configuration of a specific serving cell is fully or partially within the first period (i.e., all SPS PDSCH slots overlap with the first period), HARQ-ACK bit(s) for the corresponding SPS configuration(s) of that cell may not be included in the HARQ-ACK codebook. Accordingly, the UE may construct the HARQ-ACK codebook to include HARQ-ACK bit(s) in the following cases, excluding the aforementioned HARQ-ACK bit(s).
For example, for the remaining serving cell(s) excluding the specific serving cell, HARQ-ACK bit(s) for SPS PDSCH slots of all activated SPS configurations may be included to construct the HARQ-ACK codebook. Additionally, for the specific serving cell, HARQ-ACK bit(s) for SPS slots of all activated SPS configurations excluding the specific SPS configuration may be included in the HARQ-ACK codebook.
The UE may transmit the HARQ-ACK codebook constructed as described above through PUCCH or PUSCH. In this case, if there are no HARQ-ACK bit(s) as in the above examples (i.e., HARQ-ACK bit(s) to be included in the HARQ-ACK codebook), the UE may not report HARQ-ACK information for SPS.

(Method 3-3-7)

If SPS transmission for a specific SPS configuration of a specific serving cell is fully or partially within the first period (i.e., all SPS PDSCH slots overlap with the first period), HARQ-ACK bit(s) for the corresponding SPS configuration(s) of that cell may be indicated as NACK. That is, the corresponding HARQ-ACK bit(s) may be included in the HARQ-ACK codebook as NACK information.

General Device to which the Present Disclosure may be applied

FIG. 18 illustrates a block diagram of a wireless communication device according to an embodiment of the present disclosure.
In reference to FIG. 18, a first device 100 and a second device 200 may transmit and receive a wireless signal through a variety of radio access technologies (e.g., LTE, NR).
A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/-signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/-circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a device XXX, YYY of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a device XXX, YYY of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a user equipment (UE) in a wireless communication system, the method comprising:

receiving first information related to a first period in which a cell-related Discontinuous Transmission (DTX) is inactive and a second period in which the cell-related DTX is active;
receiving second information activating transmission of one or more semi-persistent scheduling (SPS) physical downlink shared channel (PDSCH); and
transmitting hybrid automatic repeat request-acknowledgement (HARQ-ACK) information for the one or more SPS PDSCHs based on the first information and the second information,
wherein, based on a first SPS PDSCH being included in the second period, first HARQ-ACK information for the first SPS PDSCH is included in the HARQ-ACK information, and
wherein, based on a second SPS PDSCH overlapping the first period, second HARQ-ACK information for the second SPS PDSCH is excluded from the HARQ-ACK information.

2. The method of claim 1,

wherein the HARQ-ACK information is configured to be transmitted on a specific uplink resource, and
wherein whether to transmit on the specific uplink resource is based on a relation between the specific uplink resource and at least one of the first period or the second period.

3. The method of claim 2,
wherein, based on the specific uplink resource being included in the second period, the HARQ-ACK information is transmitted on the specific uplink resource.

4. The method of claim 2,
Wherein, based on the overlapping of the specific uplink resource with the first period, the HARQ-ACK information is not transmitted on the specific uplink resource.

5. The method of claim 2,
wherein the specific uplink resource corresponds to a resource for transmission of a physical uplink control channel (PUCCH) or a physical uplink shared channel (PUSCH).

6. The method of claim 1,
wherein, based on a specific uplink resource configured to transmit the HARQ-ACK information being overlappped with the first period, transmission of the HARQ-ACK information is deferred.

7. The method of claim 6,
wherein the transmission of the deferred HARQ-ACK information is transmitted on an uplink resource allocated within a subsequent second period or an uplink resource allocated closest to a subsequent second period.

8. The method of claim 1,
wherein the second period is configured based on a pre-defined timer mapped to an index of a SPS configuration.

9. The method of claim 1,

wherein the first information is received through a radio resource control (RRC) message, and
wherein the second information is received through a medium access control-control element (MAC-CE) or downlink control information (DCI).

10. The method of claim 1,
wherein at least one of the first period or the second period is configured in a unit of a cell.

11. The method of claim 1,
wherein at least one of the first period or the second period is associated with a network energy saving (NES) mode for one or more cells of a network node to which the UE is connected.

12. A user equipment (UE) in a wireless communication system, the UE comprising:

at least one transceiver for transmitting and receiving a wireless signal; and
at least one processor for controlling the at least one transceiver,
wherein the at least one processor configured to:

receive first information related to a first period in which a cell-related Discontinuous Transmission (DTX) is inactive and a second period in which the cell-related DTX is active;
receive second information activating transmission of one or more semi-persistent scheduling (SPS) physical downlink shared channel (PDSCH); and
transmit hybrid automatic repeat request-acknowledgement (HARQ-ACK) information for the one or more SPS PDSCHs based on the first information and the second information,
wherein, based on a first SPS PDSCH being included in the second period, first HARQ-ACK information for the first SPS PDSCH is included in the HARQ-ACK information, and
wherein, based on a second SPS PDSCH overlapping the first period, second HARQ-ACK information for the second SPS PDSCH is excluded from the HARQ-ACK information.

13. A method performed by a base station in a wireless communication system, the method comprising:

transmitting first information related to a first period in which a cell-related Discontinuous Transmission (DTX) is inactive and a second period in which the cell-related DTX is active;
transmitting second information activating transmission of one or more semi-persistent scheduling (SPS) physical downlink shared channel (PDSCH); and
receiving hybrid automatic repeat request-acknowledgement (HARQ-ACK) information for the one or more SPS PDSCHs based on the first information and the second information,
wherein, based on a first SPS PDSCH being included in the second period, first HARQ-ACK information for the first SPS PDSCH is included in the HARQ-ACK information, and
wherein, based on a second SPS PDSCH overlapping the first period, second HARQ-ACK information for the second SPS PDSCH is excluded from the HARQ-ACK information.

14. A base station in a wireless communication system, the base station comprising:

at least one transceiver for transmitting and receiving a wireless signal; and
at least one processor for controlling the at least one transceiver,
wherein the at least one processor configured to:

transmit first information related to a first period in which a cell-related Discontinuous Transmission (DTX) is inactive and a second period in which the cell-related DTX is active;
transmit second information activating transmission of one or more semi-persistent scheduling (SPS) physical downlink shared channel (PDSCH); and
receive hybrid automatic repeat request-acknowledgement (HARQ-ACK) information for the one or more SPS PDSCHs based on the first information and the second information,

wherein, based on a first SPS PDSCH being included in the second period, first HARQ-ACK information for the first SPS PDSCH is included in the HARQ-ACK information, and

wherein, based on a second SPS PDSCH overlapping the first period, second HARQ-ACK information for the second SPS PDSCH is excluded from the HARQ-ACK information.

15. A processing device configured to control a user equipment in a wireless communication system, the processing device comprising:

    at least one processor; and
    at least one computer memory operatively coupled to the at least one processor and storing instructions for performing a method according to any one of claims 1 to 11 upon being executed by the at least one processor.

16. At least one non-transitory computer readable medium storing at least one instruction, wherein:
    the at least one instruction executed by at least one processor controls a device to performs a method according to any one of claims 1 to 14 in a wireless communication system.

FIG.1

FIG.2

Radio Frame 10ms

Subframe 1ms

Fixed Size

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

## FIG.4

FIG.5

Resource grid

A carrier
(up to 3300 subcarriers, i.e., 275 RBs)

A BWP

1 RB=12 subcarrier

1 RE

1 subcarrier

1 Symbol

l=0  · · · · ·

k=0

FIG.6

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601          S602          S603    S604       S605      S606          S607       S608

· DL/UL ACK/NACK
· UE CQI/PMI RI REPORT
  USING PUSCH AND PUCCH

## FIG.7

Receive 1st information related to
1st period in which cell-related DTX
is inactive and 2nd period in which
cell-related DTX is active ⟶ S710

Receive 2nd information activating
transmission of one or more SPS PDSCH ⟶ S720

Transmit HARQ-ACK information for
one or more SPS PDSCH, based on 1st
information and 2nd information ⟶ S730

FIG.8

Transmit 1st information related to
1st period in which cell-related DTX
is inactive and 2nd period in which
cell-related DTX is active

S810

Transmit 2nd information activating
transmission of one or more SPS PDSCH

S820

Receive HARQ-ACK information for
one or more SPS PDSCH, based on 1st
information and 2nd information

S830

FIG.9

UE        Network Node

RRC configuration — S910

Apply NES mode operation — S920

S930 — Apply SPS PDSCH reception status

Receive SPS PDSCH in NES mode operation — S940

S950 — Determine whether to transmit PUCCH

HARQ-ACK on PUCCH — S960

EP 4 693 977 A1

FIG.10

| | Network Node |
| --- | --- |

UE

RRC configuration — S1010

Receive SPS PDSCH — S1020

Apply Cell DTX/DRX inactive according to NES — S1030

Determine HARQ-ACK Defer — S1040

HARQ-ACK on PUCCH — S1050

FIG.11

## INTERNATIONAL SEARCH REPORT

| International application No. |
|---|
| **PCT/KR2024/004503** |

| A. | CLASSIFICATION OF SUBJECT MATTER |
|---|---|
| | **H04L 1/18**(2006.01)i; **H04L 5/00**(2006.01)i; **H04W 72/232**(2023.01)i |

According to International Patent Classification (IPC) or to both national classification and IPC

| B. | FIELDS SEARCHED |
|---|---|

Minimum documentation searched (classification system followed by classification symbols)

H04L 1/18(2006.01); H04W 76/28(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 셀(cell), DTX(Discontinuous Transmission), SPS(semi-persistent scheduling) PDSCH(physical downlink shared channel), HARQ-ACK(hybrid automatic repeat request acknowledgement), 활성화(activation), 비활성화(deactivation)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | SAMSUNG. Enhancements on cell DTX/DRX mechanism. R1-2301277, 3GPP TSG RAN WG1 Meeting #112. Athens, Greece. 17 February 2023.<br>See sections 2-4 and 6. | 1-16 |
| Y | ETRI. Enhancements on cell DTX/DRX mechanism. R1-2301048, 3GPP TSG RAN WG1 Meeting #112. Athens, Greece. 17 February 2023.<br>See section 2. | 1-16 |
| A | US 2023-0047579 A1 (SAMSUNG ELECTRONICS CO., LTD.) 16 February 2023 (2023-02-16)<br>See paragraphs [0145]-[0277]; and figures 1-18. | 1-16 |
| A | QUALCOMM INCORPORATED. Enhancements on cell DTX and DRX mechanism. R1-2301426, 3GPP TSG RAN WG1 Meeting #112. Athens, Greece. 17 February 2023.<br>See section 2; and figures 1-2. | 1-16 |
| A | VIVO. Discussions on enhancements on cell DTX/DRX mechanism. R1-2300466, 3GPP TSG RAN WG1 Meeting #112. Athens, Greece. 17 February 2023.<br>See sections 2-2.3. | 1-16 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 July 2024** | **16 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
| --- |
| **PCT/KR2024/004503** |

| Patent document cited in search report | | | Publication date (day/month/year) | Patent family member(s) | | | Publication date (day/month/year) |
| --- | --- | --- | --- | --- | --- | --- | --- |
| US | 2023-0047579 | A1 | 16 February 2023 | CN | 115707132 | A | 17 February 2023 |
| | | | | KR | 10-2024-0036024 | A | 19 March 2024 |
| | | | | WO | 2023-014053 | A1 | 09 February 2023 |

Form PCT/ISA/210 (patent family annex) (July 2022)